# EUROPEAN PATENT SPECIFICATION

(11) **EP 2 366 910 B1**
(45) Date of publication and mention of the grant of the patent: **28.11.2012**
(21) Application number: 10250398.4
(22) Date of filing: 05.03.2010
(51) Int. Cl.: F16B 21/09, F16B 5/02, F16F 1/38

(54) **Vibration isolation fastener insert**
Einsatz für vibrationsdämpfenden Verschluss
Insertion de fixation d'isolation contre les vibrations

(43) Date of publication of application: 21.09.2011
(73) Proprietor: The Young Engineers, Inc., Lake Forest, CA 9263 (US); Applied Concepts Aircraft Solutions, Inc., Stuart, FL 34997 (US)
(72) Inventor: de Mola, Manuel Loret, Jupiter, Florida 33478 (US)
(74) Representative: Price, Nigel John King

(56) References cited:
- US-A- 5 876 024
- US-A1- 2002 079 630
- US-B1- 6 216 833
- US-B1- 6 443 679
- US-B2- 7 179 039

## Description

### BACKGROUND OF THE INVENTION

This invention relates to a vibration isolation insert device that serves the purpose of dampening vibrations while fastening structures/assemblies together or installing assemblies to a vibrating structure. This insert device can be installed on a monument, assembly, panel, plate or in a composite panel to assemble or install a component part on an aircraft, moving vehicle, or vibrating structure.

The effects of vibrations are a problem in commercial aircraft. For example, vibration is transmitted by the structural beams which support the floor panels. These floor panels are typically made of an aluminum honeycomb, or other rigid, lightweight material and vibration causes the panels to vibrate which creates sound. This background sound can be unpleasant and interfere with ordinary conversation, disturb sleep and the like. Other structures or monuments normally found in aircraft interiors such as seats, galleys, bulkheads, etc. supported by the base airframe structure are also subject to vibration and the creation of unwanted sound and noise.

All of the effects are undesirable and reduce the flying customer's comfort and satisfaction.

The practice of using isolators on vehicles is longstanding. They are used to reduce noise and eliminate the transfer of isolating frequencies to the passenger cabin, thereby reducing perceived noise and reducing passenger fatigue. It has been common practice to isolate monuments (e.g., furnishings) and/or added components on an aircraft or vehicles with the use of external isolator mounts (i.e., isolating devices mounted to the aircraft or vehicle structure). These isolator mounts generally require additional brackets, fasteners and other adapters in order to make isolation functional in a vibrating environment.

U.S. 6,443,679 issued to Schwarz on September 3, 2002 shows a vibration-dampening connecting arrangement for the detachable connection of two components with a releasing part, which can be moved on a bolt guided by a bush. U.S. 7,179,039 issued to Schwartz et al. on February 20, 2007 shows a vibration-damping ring insert arrangement and component connection arrangement incorporating the same. U.S. 5,876,023 issued to Hain et al. on March 2, 1999 and companion U.S. Patent No. 5,876,024 shows a vibration isolation insert for aircraft floor panels and the like. U.S. Patent Nos. 6,065,742, 6,138,980, 6,216,833 B1, 6,394,432 B1, 6,715,746 and Enidine GmbH U.S. Patent No. 7,131,786 B2 are also patents in this field.

According to an aspect of the invention, there is provided a vibration isolation fastener insert structure adapted to be partially or wholly snugly received in a hole in a panel comprising:
a rigid cylindrical hub having an externally extending flange and a central through longitudinal opening adapted to receive a fastener element;
an elastomeric bushing snugly carried or formed around said hub and having a slot therein receiving said externally projecting flange;
an upper housing;
a lower housing;
the upper housing being disposed around the side of said bushing and having a flange over the top of said bushing and the lower housing disposed around the external side of said upper housing and having a flange extending below a lower surface of said bushing.

In an embodiment, the lower housing being externally threaded.

According to another aspect of the invention, there is provided a panel assembly having the vibration isolation fastener insert above at least partially snugly received in said hole of said panel.

According to another aspect of the invention, there is provided a panel assembly as described above, said panel further having upper and lower flanges, the lower flange having a cylindrical element being snugly received in the through hole and the upper flange having a cylindrical element being received in said lower flange and carrying inwardly projecting threads,
said lower housing of the vibration isolation fastener insert having external threads, and
said external threads on said lower housing being made up with the inwardly projecting threads on said upper flange.

The invention is directed to aircraft having fastener inserts incorporated in a member which can be a honeycomb or composite or metal panel forming composite part of the floor, seat, overhead locker, etc. or sheet metal or plate component to support avionic equipment or the like. This invention can also be applied directly to the airframe metal structure as a swaged insert on to the metal structure in similar manner as to plate or sheet metal.

In one preferred embodiment, a thru hole is cut in the panel, the upper and lower flanges are pressed in and the flanges are also bonded on the skins of the panel with adhesive then potting material is injected to form the "desification".

Separately, the upper and lower housing with the "C" cross-section shaped elastomeric bushing and hub are assembled. An elastomeric spacer ring can be dropped into place if spacing is desired. Then the above described assembly is threaded into place, female threads on the lower housing engaging the inwardly projecting male threads on the lower flange. The assembly can be advanced as desired.

The purpose of the elastomeric bushing is to provide a vibration dampener between the two structural parts. The nut, bolt and seat track do not form part of the invention but do show how the insert is used.

The "potted-in" embodiment is preferred but not a limitation since the fastener inserts can be held in, for example, a metal sheet or directly to the airframe panel by force or interference fit, viz., swaging or bonded-on.

In case of application directly to sheet metal, plate or airframe metal structure, isolator insert will be swaged to metal in similar manner as a rivet or clinch nut.

### DESCRIPTION OF THE PREFERRED EMBODIMENT

The invention incorporates a vibration isolation insert as a permanent component of the monument, panel, assembly, plate and/or composite panel (hereafter collectively called monument). This insert device is assembled with an internal elastomer with dampening characteristics that can be modulated to accommodate different frequencies. Its various embodiments allow for an infinite number of permutations.

For example, the fastener inserts are used in floor panels to fasten the floor panel to a structural floor track or beam. Other uses are to fasten seats, galleys, overhead lockers, bulkheads, lavatories and the like.

The invention includes an elastomeric part within the fastener insert, to isolate, for example, the floor from structural vibration within the main structural framework of the aircraft and thereby make the passenger compartment more comfortable and pleasing to the passenger.

### THE DRAWINGS

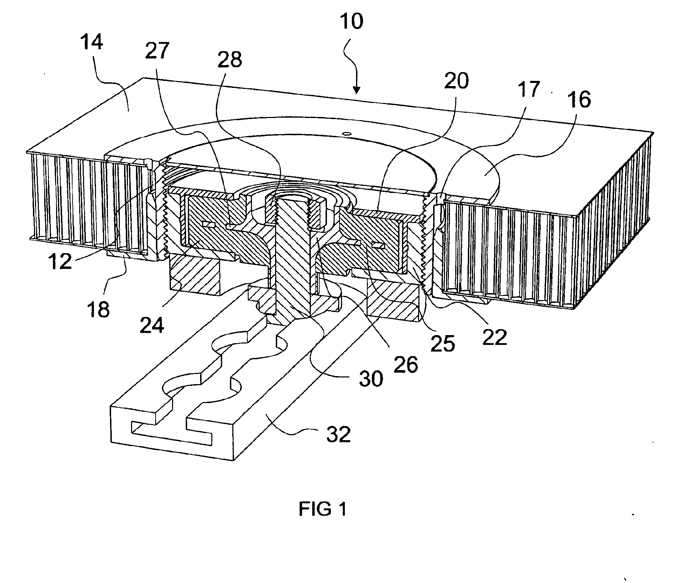

The basic design of one embodiment of a panel assembly with the vibration isolation insert in place is as shown in cross-section in Figure 1.
Figure 2 shows another embodiment of the invention in cross-section.
Figure 3 shows one application of the vibration isolation insert of Figure 2.
Figure 4 shows another application of the vibration isolation insert of Figure 3.

Turning to Figure 1 in more detail, the insert 10 is adapted to be received in a hole 12 drilled in panel 14, typically a honeycomb panel. In use, the upper and lower flanges 16 and 18 are inserted into hole 12 and held by an interference or press fit, i.e., swaged. Alternatively, the flanges 16 and 18 can be potted in by a liquid potting compound or glue, injected via potting holes 17, which, after injection, hardens and adheres to surfaces of upper flange 16 and lower flange 18 and to exposed cells within the honeycomb panel 14, holding the flanges in place. The flanges are usually bonded on first with an adhesive and then potted-in with a potting compound.

Next, the upper housing 20, lower housing 22 having external male threads, elastomeric bushing 24, hub 26 are pre-assembled with the external flange 27 on hub 26 being received in slot 25 in elastomer bushing 24 and the so sub-assembly threaded into the female threads on upper flange 16. The elastomer can be over-molded onto hub 26 whereby the holes on hub are used for anti-rotation and increased bonding surface for the elastomer. Finally, a nut 28 and bolt 30 are inserted and made up to join the panel 14 to the structural track 32.

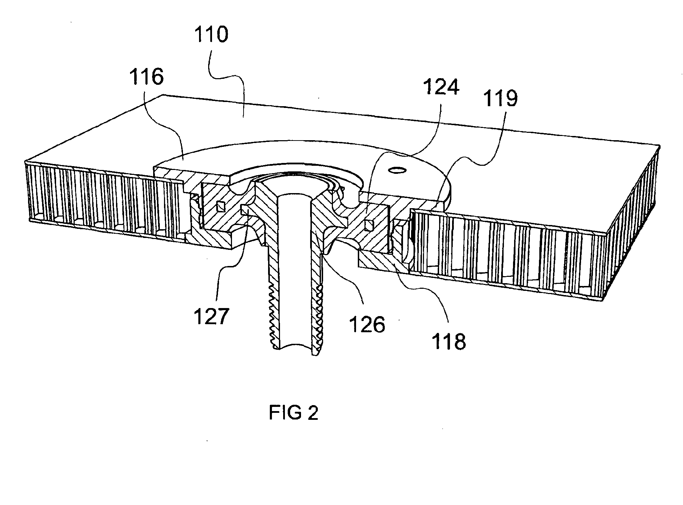

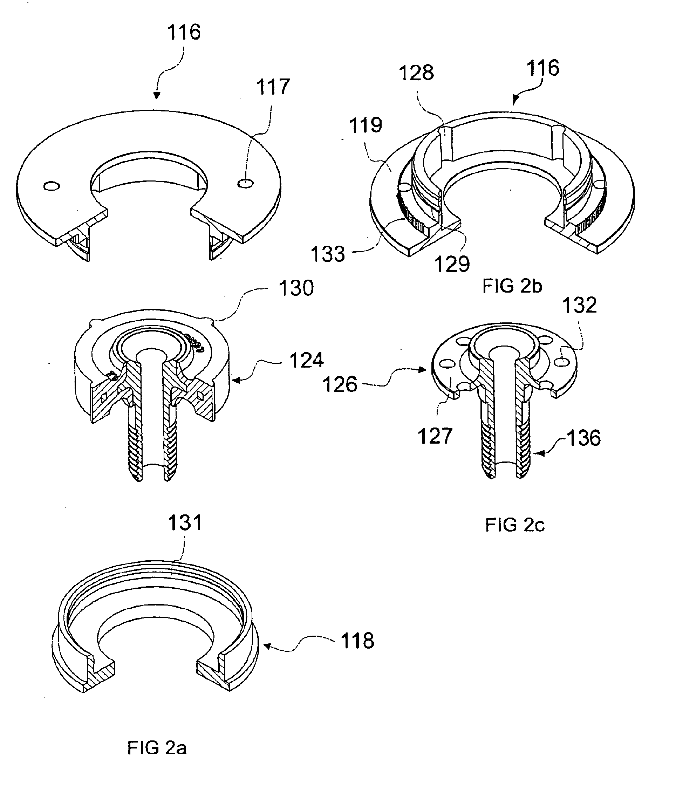

Turning to Figures 2a, 2b and 2c of 2, the drawings, in this embodiment the upper flange 116 and the lower flange 118 are press fit, screwed or swaged to each other and capture components. The elastomeric bushing 124 and hub 126 (elastomer/metal hub assembly) are positioned as shown. The dimensions and materials for flange 116 and flange 118 will depend on the type and size of fasteners (e.g., screw, anchor, etc.) used to secure the monument to the vehicle structure and the material into which it will be installed. Flange 116 and flange 118 will accommodate different applications whereby the overlying elements 119 on flanges 116 and 118 may be omitted and the balance of the flanges 116 and 118 are flush with the surface of the panel 110 or may overlap the surface(s) of the panel 110 to increase the strength of the insert under various tensile, shear or torsion loading conditions. The holes 117 are for the injection of potting material and venting of air as potting is carried out.

Hub 126 is to be cylindrical in shape with a circular "T" flange 127 intersecting the cylinder. The flange 127 component on hub 126 are larger than the clearance hole openings on flanges 116 and 118 such that it is retained if pulled axially, even if elastomeric bushing 124 would fail. Hub 126 may be threaded internally to accept any size screw or it can remain unthreaded or through-drilled to act as a bushing, either with/without a countersink on either end to accommodate a flat-head screw. Hub 126 may also be threaded externally at its exposed end to accept adapters of different sizes. The diameter dimensions and finishes of hub 126 may vary to accommodate various size screws, and to accommodate strength requirements.

Elastomeric bushing 124 may have ribs or projections 130 to provide anti-rotation elements which can engage slots 128.

Flange 118 may have a snap ring 131 to facilitate engagement with snap groove 129 on flange 116.

Elastomeric bushing 124 may or may not be bonded to hub 126 such as by molding and will have the required characteristics to provide the optimum dampening under the loads for each condition. Various dampening effects can be achieved by modifying the material characteristics and dimensions of elastomeric bushing 124.

Optionally, flange 116 may have an anti-rotation knurled ring or area 133.

Hub 126 may have holes 132 in flange 127 to allow for over-molding of elastomer and thereby prevent relative rotation. Hub 126 as shown, for example, in Figure 2c may have self-locking internal threads. The external threads may also be self-locking. Hub 126 may also be double ended, that is, have a flange at both of its ends.

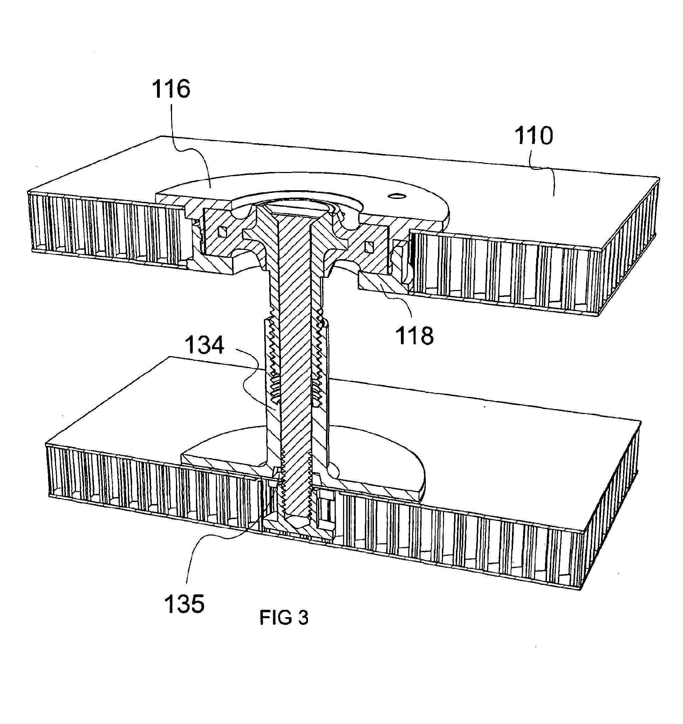

As shown in Figure 3, two honeycomb panels can also be joined and held in spaced apart relationship using a stand off 134.

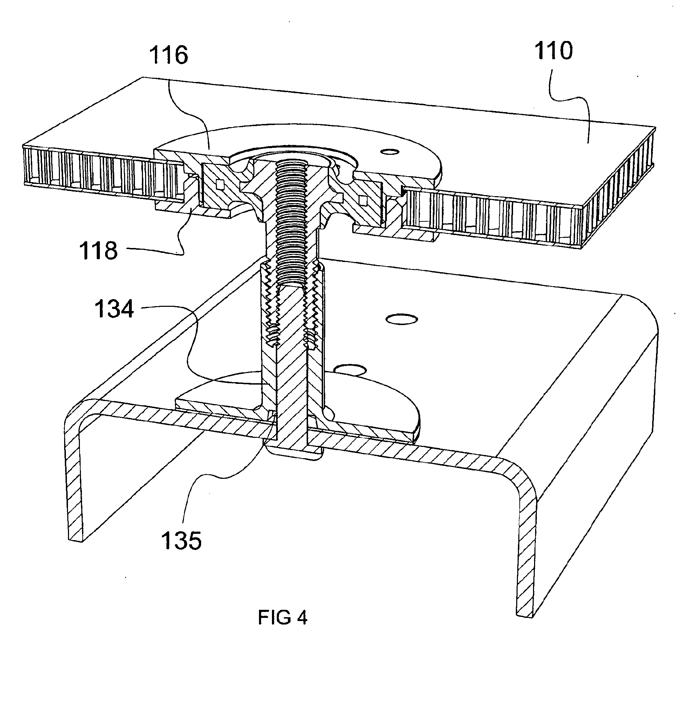

Figure 4 shows the vibration isolation fastener in a panel used to join to another panel with separation provided by standoff 134.

As shown in Figures 3 and 4, the assembly can be secured by anti-rotation hex nut 135.

This invention lends itself to include the development of a family of insert types that will address many applications and uses. This family of inserts may be viewed in two general categories: Potted Isolator Inserts and swaged Isolator Inserts. The Potted Isolator Insert category would typically be installed through a honeycomb panel attached to (or part of) the monument, and would be secured via the application of a potting compound in the panel cavity surrounding the installed insert and possibly via bonding to flanges of components 116 and 118. The swaged Isolator Insert embodiment would typically be installed in a panel attached to (or part of) the monument by crimping its outer flange(s) after the Insert is installed in a receiving hole on the panel. A panel could be a plate, a group of stacked plates or the web of an extrusion of any type of material depending on the application. Honeycomb panels are panels manufactured with two rigid skins and a lightweight core. Generally, honeycomb panels come in many thicknesses and vary in core material, core density, skin materials, skin thickness, and adhesive type.

The installation and application of these inserts include many fastening methods for us with the various fastener types and sizes commonly used in aircraft and other vehicles. The family of Isolator Inserts of this invention will accommodate typical metric and Imperial fastener sizes, and will address derivatives that include studs, through fasteners, threaded fasteners, and additional attachments.

The Potted Isolator Insert category will include, among other embodiments:
1. Adjustable threaded hub w/an assembled outer ring assembly.
2. Adjustable threaded hub w/an un-assembled 2-piece plug/sleeve assembly for adjustability.
3. When addressing bulkhead or vertical panel applications the hub will have bidirectional extensions, extending on opposite directions. These may also be threaded or not internally and externally.
4. Inserts as noted: fully assembled and ready for installation; or an un-assembled insert in three or five parts (i.e., flanges and elastomeric bushing/hub assembly) to be assembled and installed by customer.

The swaged Isolator Insert category will include, among other embodiments:
1. Adjustable threaded hub w/an assembled outer ring assembly to be press fit into a panel hole.
2. Adjustable threaded hub w/an un-assembled 2-piece flanges assembly to be press fit or threaded upon installation.
3. Inserts as noted: fully assembled and ready for installation; or an un-assembled insert in three or five parts (i.e., flanges and elastomer bushing/hub assembly) to be assembled and installed by customer.

## Claims

1. A vibration isolation fastener insert (10) structure adapted to be partially or wholly snugly received in a hole (12) in a panel (14) comprising:
a rigid cylindrical hub (26) having an externally extending flange (27) and a central through longitudinal opening (25) adapted to receive a fastener element;
an elastomeric bushing (24) snugly carried or formed around said hub and having a slot therein receiving said externally projecting flange;
an upper housing (20);
a lower housing (22);
the upper housing being disposed around the side of said bushing and having a flange over the top of said bushing and the lower housing disposed around the external side of said upper housing and having a flange extending below a lower surface of said bushing.

2. A vibration isolation fastener insert structure according to claim 1, wherein said lower housing is externally threaded.

3. A panel assembly having the vibration isolation fastener insert (10) of claim 1, at least partially snugly received in said hole (12) of said panel.

4. The panel assembly according to claim 3, wherein the lower housing is externally threaded.

5. The panel assembly according to claim 3 or claim 4, wherein the panel is honeycomb.

6. The panel assembly according to any one of claims 3 to 5, wherein said vibration isolation fastener insert is swaged into said panel.

7. The panel assembly according to any one of claims 3 to 6, wherein said vibration isolation fastener insert is potted into said panel.

8. A panel assembly according to any one of claims 3 to 7, said panel further having upper and lower flanges (16, 18), the lower flange (18) having a cylindrical element being snugly received in the through hole and the upper flange (16) having a cylindrical element being received in said lower flange and carrying inwardly projecting threads,
said lower housing (22) of the vibration isolation fastener insert (10) having external threads, and
said external threads on said lower housing (22) being made up with the inwardly projecting threads on said upper flange (16).

## Patentansprüche

1. Einsatzgebilde (10) für ein vibrationsisolierendes Befestigungsmittel, das ausgelegt ist, um teilweise odervollständig eng in einem Loch (12) in einer Platte (14) aufgenommen zu werden, wobei es umfasst:
eine starre zylindrische Nabe (26) mit einem sich nach außen erstreckenden Flansch (27) und einer mittleren längs gerichteten Durchgangsöffnung (25), die ausgelegt ist, um ein Befestigungselement aufzunehmen;
eine Elastomerbuchse (24), die um eng die Nabe geführt oder ausgebildet ist und darin einen Schlitz aufweist, der den nach außen ragenden Flansch aufnimmt;
ein oberes Gehäuse (20);
ein unteres Gehäuse (22);
wobei das obere Gehäuse um die Seite der Buchse angeordnet ist und einen Flansch über der Oberseite der Buchse aufweist und das untere Gehäuse um die Außenseite des oberen Gehäuses angeordnet ist und einen Flansch aufweist, der sich unter einer unteren Fläche der Buchse erstreckt.

2. Einsatzgebilde für ein vibrationsisolierendes Befestigungsmittel nach Anspruch 1, wobei das untere Gehäuse ein Außengewinde aufweist

3. Plattenanordnung mit dem Einsatz (10) für ein vibrationsisolierendes Befestigungsmittel nach Anspruch 1, der zumindest teilweise eng in dem Loch (12) der Platte aufgenommen ist.

4. Plattenanordnung nach Anspruch 3, wobei das untere Gehäuse ein Außengewinde aufweist.

5. Plattenanordnung nach Anspruch 3 oder 4, wobei die Platte wabenförmig ist.

6. Plattenanordnung nach einem der Ansprüche 3 bis 5, wobei der Einsatz für ein vibrationsisolierendes Befestigungsmittel in die Platte gestaucht ist.

7. Plattenanordnung nach einem der Ansprüche 3 bis 6, wobei der Einsatz für ein vibrationsisolierendes Befestigungsmittel in die Platte vergossen ist.

8. Plattenanordnung nach einem der Ansprüche 3 bis 7, wobei die Platte weiterhin obere und untere Flansche (16, 18) aufweist, wobei der untere Flansch (18) ein in der Durchgangsbohrung eng aufgenommenes zylindrisches Element aufweist und der obere Flansch (16) ein in dem unteren Flansch aufgenommenes und nach innen ragende Gewinde tragendes zylindrisches Element aufweist,
wobei das untere Gehäuse (22) des Einsatzes (10) für ein vibrationsisolierendes Befestigungsmittel Außengewinde aufweist und
die Außengewinde an dem unteren Gehäuse (22) mit den nach innen ragenden Gewinden an dem oberen Flansch (16) vervollständigt sind.

## Revendications

1. Structure d'insert d'élément de fixation d'isolement vis-à-vis des vibrations (10) adaptée de façon à être reçue de façon partiellement ou totalement affleurante dans un trou (12) dans un panneau (14), comprenant :
un moyeu cylindrique rigide (26) comportant une bride s'étendant extérieurement (27) et une ouverture longitudinale traversante centrale (25) adaptée de façon à recevoir un élément de fixation ;
un coussinet élastomère (24) porté de façon affleurante ou formé autour dudit moyeu, et comportant à l'intérieur de celui-ci une fente recevant ladite bride faisant saillie vers l'extérieur ;
un boîtier supérieur (20) ;
un boîtier inférieur (22) ;
le boîtier supérieur étant disposé autour du côté dudit coussinet et comportant une bride sur le sommet dudit coussinet, et le boîtier inférieur étant disposé autour du côté extérieur dudit boîtier supérieur et comportant une bride s'étendant en dessous d'une surface inférieure dudit coussinet.

2. Structure d'insert d'élément de fixation d'isolement vis-à-vis des vibrations selon la revendication 1, dans laquelle ledit boîtier inférieur est extérieurement fileté.

3. Ensemble de panneau comportant l'insert d'élément de fixation d'isolement vis-à-vis des vibrations (10) selon la revendication 1, reçu de façon au moins partiellement affleurante dans ledit trou (12) dudit panneau.

4. Ensemble de panneau selon la revendication 3, dans lequel le boîtier inférieur est extérieurement fileté.

5. Ensemble de panneau selon la revendication 3 ou la revendication 4, dans lequel le panneau est à nid d'abeilles.

6. Ensemble de panneau selon l'une quelconque des revendications 3 à 5, dans lequel ledit insert d'élément de fixation d'isolement vis-à-vis des vibrations est estampé dans ledit panneau.

7. Ensemble de panneau selon l'une quelconque des revendications 3 à 6, dans lequel ledit insert d'élément de fixation d'isolement vis-à-vis des vibrations est enrobé dans ledit panneau.

8. Ensemble de panneau selon l'une quelconque des revendications 3 à 7, ledit panneau comportant de plus des brides supérieure et inférieure (16, 18), la bride inférieure (18) comportant un élément cylindrique qui est reçu de façon affleurante dans le trou traversant et la bride supérieure (16) comportant un élément cylindrique qui est reçu dans ladite bride inférieure et qui porte des filetages faisant saillie vers l'intérieur,
ledit boîtier inférieur (22) de l'insert d'élément de fixation d'isolement vis-à-vis des vibrations (10) comportant des filetages extérieurs, et
lesdits filetages extérieurs sur ledit boîtier inférieur (22) étant accouplés avec les filetages faisant saillie vers l'intérieur sur ladite bride supérieure (16).
